# EUROPÄISCHE PATENTSCHRIFT

(11) **EP 0 840 546 B1**
(45) Veröffentlichungstag und Bekanntmachung des Hinweises auf die Patenterteilung: **16.08.2001**
(21) Anmeldenummer: 97921515.9
(22) Anmeldetag: 15.05.1997
(51) Int. Cl.: A01G 25/06, E02B 11/00

(54) **VORRICHTUNG ZUR ZU- ODER ABFUHR VON FLUIDEN IN BZW. AUS ERDREICH, FILTERBETTEN OD.DGL.**
DEVICE TO INTRODUCE FLUIDS INTO SOIL, FILTER BEDS ETC. OR TO REMOVE THEM FROM SAME
DISPOSITIF POUR AMENER DES FLUIDES DANS LE SOL, DANS DES LITS FILTRANTS, ETC., OU LES EN SORTIR

(30) Priorität: 17.05.1996 AT 29596 U
(43) Veröffentlichungstag der Anmeldung: 13.05.1998
(73) Patentinhaber: Fleischhacker, Gerhard, 9330 Treibach (AT)
(72) Erfinder: Fleischhacker, Gerhard, 9330 Treibach (AT)
(74) Vertreter: Pawloy, Peter Michael, Dipl.-Ing.
(86) Internationale Anmeldenummer: AT9700099
(87) Internationale Veröffentlichungsnummer: WO9743895

(56) Entgegenhaltungen:
- EP-A- 0 055 385
- EP-A- 0 462 038
- WO-A-94/25676
- DE-A- 2 012 146
- FR-A- 2 396 231
- US-A- 4 094 466
- US-A- 4 235 561
- US-A- 5 474 398

## Beschreibung

Die vorliegende Erfindung betrifft eine Vorrichtung zur Zu- oder Abfuhr von Fluiden in bzw. aus Erdreich, Filterbetten od.dgl., mit einem rohrförmigen Körper, dessen Wandung poröse Durchströmbereiche für radiale Durchströmung aufweist.

Unter dem Begriff "Fluid" werden in der vorliegenden Beschreibung sowohl Gase als auch Flüssigkeiten verstanden. Die Vorrichtung der Erfindung kann sowohl zur Be- als auch Entwässerung, Be- oder Entgasung von Böden, Bergwänden, Filterbetten od.dgl. verwendet werden. Speziell im Falle der Zu- oder Abfuhr von Wasser zu bzw. aus Erdreich werden derartige Vorrichtungen als Sickerbewässerungsrohre bzw. Sickerdrainagierungsrohre bezeichnet.

Ein spezielles Bewässerungsrohr der einleitend genannten Art ist aus der EP 0 055 385 bekannt und weist einen zweischichtigen, flexiblen Schlauch aus porösem Kunststoffmaterial auf, wobei die Porengröße der eintrittsseitigen Schicht größer ist als jene der austrittsseitigen Schicht. Diese Konstruktion neigt zu einem Verlegen der Poren durch allfällige vom Fluid mitgeführte Schmutzteilchen. Abgesehen davon ist auf Grund der flexiblen Ausbildung keine mechanische Festigkeit für großdurchmeßrige Rohre gegeben und die Vorrichtung kann dem Druck des Umgebungsmaterials in großen Verlegungstiefen nicht standhalten.

Anderseits sind Sickerrohre bekannt, die aus starrem Material, z.B. Beton, gefertigt sind und eine Vielzahl verteilter, lokaler Flüssigkeitsein- oder -austrittsöffnungen aufweisen. Hier ergibt sich das Problem einer unzulänglichen gleichmäßigen Verteilung des Flüssigkeits- bzw. Gasein- oder Austrittes sowie die Gefahr eines Verlegens der Öffnungen.

Die Erfindung setzt sich zum Ziel, eine universell einsetzbare Vorrichtung der einleitend genannten Art zu schaffen, welche auch starken mechanischen Beanspruchungen, z.B. hohen Erddrücken, standhalten kann, dabei einen gleichmäßigen, fein verteilten Aus- oder Eintritt von Fluiden über ihren gesamten Umfang und ihre gesamte Längserstreckung gewährleistet, und bei der die Gefahr eines Verlegens der Aus- bzw. Eintrittsöffnungen minimiert ist. Dieses Ziel wird mit einer Vorrichtung der genannten Art erreicht, die sich erfindungsgemäß dadurch auszeichnet, daß der Körper aus starrem Material lokal unterschiedlicher Porosität gefertigt ist, wobei jeder Durchströmbereich in radialer Richtung einen an sich bekannten zwei- oder mehrschichtigen Aufbau hat, bei welchem der freie Durchströmquerschnitt pro Flächeneinheit in Durchströmrichtung von Schicht zu Schicht zunimmt.

An dieser Stelle sei erwähnt, daß der genannte Mehrschichtenaufbau bei flachen Filterplatten wie Bodenflächenbefestigungen, Bodenplatten, Fahrbahnen od.dgl., aus der AT 400 960 an sich bekannt ist.

Die erfindungsgemäße Vorrichtung besitzt auf Grund ihrer starren Konstruktion ausgezeichnete statische Festigkeitseigenschaften und kann auch hohen mechanischen Beanspruchungen, wie hohen Erddrücken in großer Verlegungstiefe, unter oder in Berghängen usw., widerstehen. Die poröse Wandungskonstruktion gewährleistet eine gleichmäßige, fein verteilte Abgabe oder Aufnahme der Fluide, wobei der spezielle Mehrschichtenaufbau ein Verlegen der Poren weitgehend verhindert. Insbesondere können im Fluid enthaltene Feststoffe nur bis zu einer bestimmten Korngröße in die erste Schicht eindringen; sind sie einmal eingedrungen, verlegen sie wegen der Zunahme des freien Durchströmquerschnittes in den darauffolgenden Schichten nicht die Rohrwandung, sondern werden zur Austrittsseite hin ausgetragen. Allfällige Kontaminationen des Fluides werden von der Rohrwandung bis zu einem bestimmten Grad absorbiert und in einem biologischen Abbauprozeß regeneriert, welcher durch das in aufeinanderfolgenden Schichten zunehmende Luftvolumen beschleunigt ist, das auch für eine selbsttätige Entlüftung der Rohrwandung sorgt.

Gemäß einer ersten, besonders vorteilhaften Ausführungsform der Erfindung wird vorgesehen, daß der Außenumfang jedes lokal begrenzten Durchströmbereiches sich in Durchströmrichtung zumindest abschnittsweise verengt, was die Widerstandsfähigkeit gegenüber Druckbeanspruchungen in Durchströmrichtung wesentlich erhöht.

Besonders vorteilhaft ist es, wenn lokal begrenzte Durchströmbereiche durch Verfüllen entsprechender Radialöffnungen des rohrförmigen Körpers mit porösem Material gefertigt werden.

Eine besonders vorteilhafte Ausführungsform der Erfindung, welche sich insbesondere zur horizontalen oder geneigten Verlegung und zur Abfuhr von Flüssigkeiten eignet, zeichnet sich dadurch aus, daß die Durchströmbereiche in der oberen Hälfte des rohrförmigen Körpers angeordnet sind. Dadurch bildet die untere Hälfte des rohrförmigen Körpers eine Ablaufrinne, wogegen die obere Hälfte als Flüssigkeitseintrittsfilter wirkt.

Der gleiche Effekt kann mit einer weiteren, besonders bevorzugten Ausführungsform der Erfindung erreicht werden, bei welcher die gesamte obere Hälfte des rohrförmigen Körpers als ein einziger Durchströmbereich ausgebildet wird.

Gemäß einer dritten alternativen Ausführungsform der Erfindung wird sogar die gesamte Wandung des rohrförmigen Körpers als ein einziger Durchströmbereich ausgebildet. Mit anderen Worten handelt es sich hier um ein starres, vollständig poröses Rohr mit zwei- bzw. mehrschichtigem Aufbau der Rohrwandung.

In jedem Fall ist es besonders vorteilhaft, wenn jeder Durchströmbereich eine feinporige strömungseintrittsseitige Schicht mit einer radialen Dicke von 1-10% und eine grobporige strömungsaustrittsseitige Schicht mit einer radialen Dicke von 99-90% der Gesamtdicke der Rohrwandung aufweist. Diese Werte haben sich in der Praxis als optimal für die Erreichung der genannten Ziele erwiesen.

Gemäß einem weiteren Merkmal der Erfindung können die strömungsaustrittsseitigen Schichten der Durchströmbereiche in an sich bekannter Weise zusätzlich mit Radialkanälen versehen werden, die sich vorzugsweise in Durchströmrichtung erweitern. Die Radialkanäle fördern zusätzlich die Entlüftung bzw. Drainagierung des porösen Materials selbst.

Zur Erhöhung der mechanischen Festigkeit wird bevorzugt vorgesehen, in den rohrförmigen Körper radiale und/oder axialparallele Armierungen einzubetten. Diese Maßnahme ist insbesondere für großdurchmeßrige Rohrvorrichtungen zweckmäßig, beispielsweise wenn die gesamte Vorrichtung als begeh- oder befahrbares Tunnelelement eingesetzt wird.

Größtmögliche mechanische Festigkeit und einfache Fertigung läßt sich erzielen, wenn gemäß einem weiteren Merkmal der Erfindung die Vorrichtung aus Beton-, Kunststoff- oder Kunstharzsorten unterschiedlicher Porosität gefertigt ist.

In jedem Fall kann erfindungsgemäß auch in Betracht gezogen werden, daß die Vorrichtung aus einzelnen Radial- und/oder Axialsegmenten zusammengesetzt ist.

Die Erfindung wird nachstehend an Hand von in den Zeichnungen dargestellten Ausführungsbeispielen näher erläutert.
Fig. 1 zeigt eine erste Ausführungsform der erfindungsgemäßen Vorrichtung zur Zufuhr von Fluiden, beispielsweise als "bewässernder Schachtring" zur vertikalen Verlegung, in einer Schrägansicht,
Fig. 2 eine zweite Ausführungsform der erfindungsgemäßen Vorrichtung zur Abfuhr von Fluiden, z.B. einen "drainagierenden Schachtring" zur vertikalen Verlegung,
Fig. 3 eine dritte Ausführungsform zur Abfuhr von Fluiden, z.B. als "entwässerndes Kanalrohr" zur horizontalen Verlegung,
Fig. 4 eine vierte Ausführungsform zur Fluidzufuhr, beispielsweise als Bewässerungsleitung, mit lokal begrenzten Durchströmbereichen im Schnitt, und die
Fig. 5 bis 7 weitere Ausführungsformen zur Fluidabfuhr (Fig. 5) bzw. Fluidzufuhr (Fig. 6, 7) ausschnittsweise in Schrägansichten.

Es versteht sich, daß in den Figuren jeweils nur ein axial endlicher Abschnitt der (an sich in beliebiger Länge ausführbaren) Vorrichtung dargestellt ist. Selbstverständlich können auch mehrere Einzelvorrichtungen zu einer längeren Rohrleitung zusammengesetzt werden.

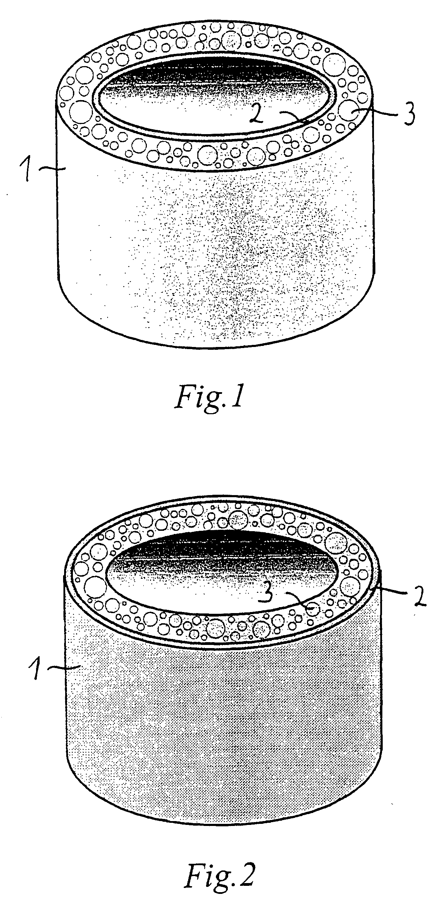

Bei den Ausführungsformen der Fig. 1 und 2 ist jeweils die gesamte Wandung des rohrförmigen Körpers 1 als ein einziger Durchströmbereich ausgebildet, u.zw. in Fig. 1 für eine Durchströmung in radialer Richtung nach außen und in Fig. 2 für eine Durchströmung in radialer Richtung nach innen. Die Rohrwandung besitzt einen zweischichtigen Aufbau, u.zw. eine strömungseintrittsseitige Schicht 2 mit einer radialen Dicke im Bereich von 3-10% der Gesamtdicke der Rohrwandung und eine strömungsaustrittsseitige Schicht 3 mit einer radialen Dicke im Bereich von 97-90% der Gesamtdicke. Der freie Durchströmquerschnitt pro Flächeneinheit der Schicht 2 ist kleiner als der freie Durchströmquerschnitt pro Flächeneinheit der Schicht 3. In einer alternativen (nicht dargestellten) Ausführungsform können auch mehr als zwei Schichten vorgesehen werden, in welchem Fall der freie Durchströmquerschnitt pro Flächeneinheit von Schicht zu Schicht in Durchströmrichtung zunimmt.

Die Änderung des freien Durchströmquerschnittes wird mit Hilfe einer unterschiedlichen Porengröße der Schichten 2 und 3 erreicht. Alternativ könnte anstelle der Porengröße die Anzahl von Poren pro Flächeneinheit variiert werden.

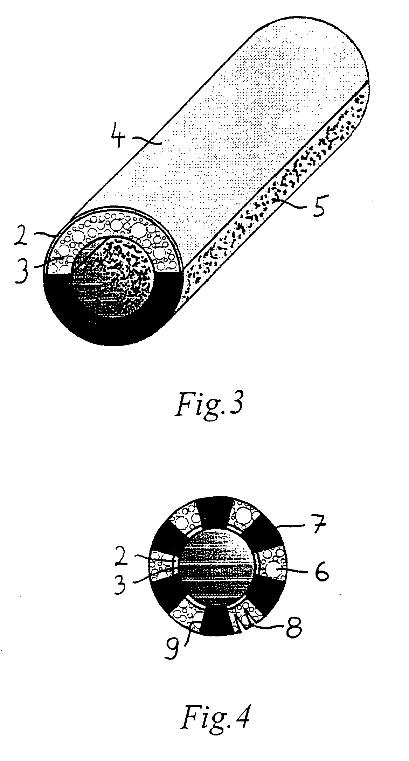

Fig. 3 zeigt eine Ausführungsform für eine Durchströmung in radialer Richtung nach innen, wobei die gesamte obere Hälfte 4 als ein einziger Durchströmbereich ausgebildet ist, wogegen die untere Hälfte 5 aus weitgehend undurchdringlichem Material, z.B. Vollbeton oder Vollkunststoff, gefertigt ist. Die untere Hälfte 5 bildet somit eine Art "Rinne", so daß sich die Ausführungsform der Fig. 3 insbesondere zur Flüssigkeitsabfuhr bei horizontaler bzw. geneigter Verlegung eignet.

Bei der Ausführungsform von Fig. 4, welche für eine Durchströmung in radialer Richtung nach außen bestimmt ist, sind die Durchströmbereiche 6 auf lokale Inseln in der Wandung 7 des rohrförmigen Körpers reduziert, welche aus weitgehend undurchdringlichem Material gefertigt ist. Der Außenumfang der Durchströmbereiche 6 erweitert sich in Durchströmrichtung, so daß diese Ausführungsform auch starken Druckbeanspruchungen von außen, z.B. durch den Erddruck, widerstehen kann.

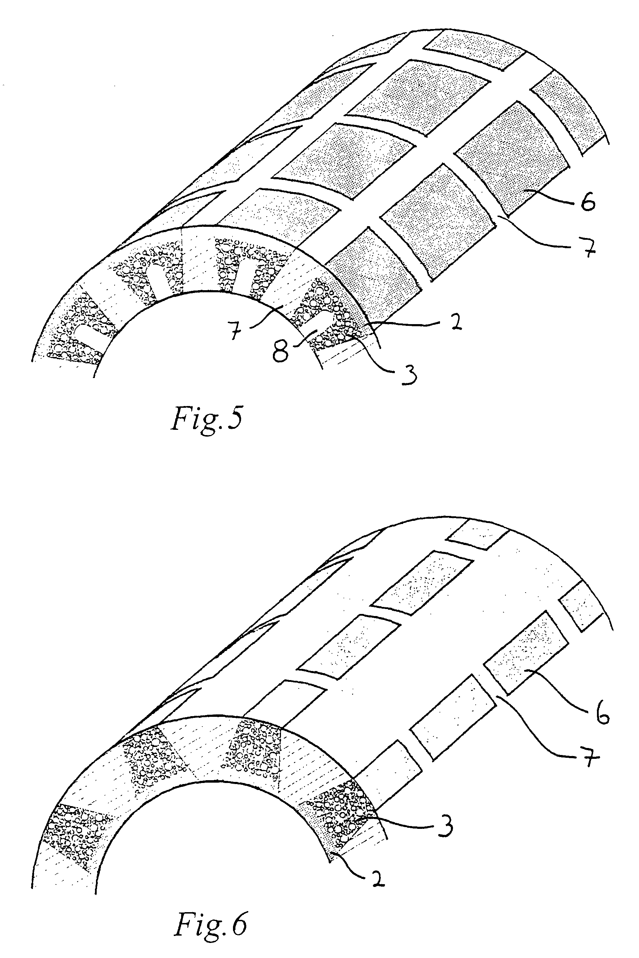

Die Ausführungsformen der Fig. 5 bis 7 zeigen, daß sich die Durchströmbereiche 6 in axialer Richtung gesehen periodisch in Form von Streifen begrenzter Länge erstrecken können. Alternativ könnten die Durchströmbereiche 6 sich auch endlos erstrecken oder z.B. quadratische oder runde Form haben. Auch ist es möglich, daß sie in axialer Richtung gesehen sich erweitern, z.B. zur Gänze als kegel- oder trapezstumpfförmige Stopfen mit zylindrischer Basis und Deckfläche ausgebildet sind.

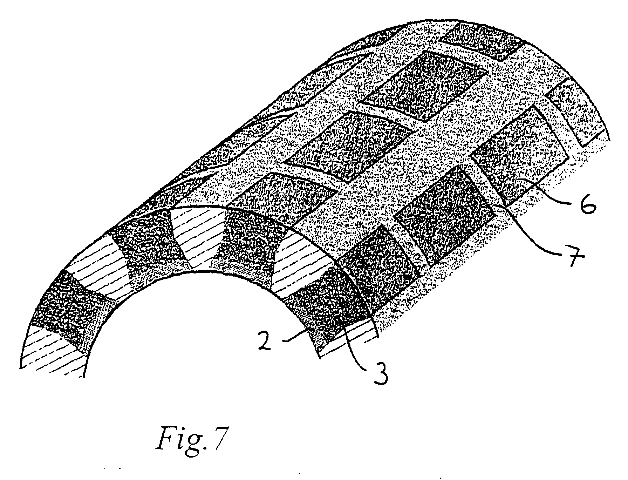

Darüber hinaus zeigen die Fig. 6 und 7 Ausführungsformen, bei welchen sich der Außenumfang jedes lokal begrenzten Durchströmbereiches 6 in Durchströmrichtung gesehen zumindest im eintrittsseitigen Abschnitt (Fig. 7) bzw. über die gesamte Radialerstreckung (Fig. 6) verengt. Diese Varianten sind besonders widerstandsfähig gegenüber einer Druckbeanspruchung in Durchströmrichtung, z.B. für Fluide unter großem Druck. Es ist somit ersichtlich, daß die Durchströmbereiche 6 zwei unterschiedlichen Anforderungen gerecht werden müssen, einerseits der Druckbeanspruchung durch das Fluid in Durchströmrichtung und anderseits einer allfälligen Druckbeanspruchung von außen von dem umgebenden Erdreich. Insbesondere die Variante der Fig. 7 stellt daher einen Kompromiß für den Anwendungsfall der radialen Durchströmung nach außen dar, bei welchem diese beiden Beanspruchungen gegeneinander wirken.

Für einen der Durchströmbereiche 6 von Fig. 4 (stellvertretend für alle Durchströmbereiche) und für die Durchströmbereiche von Fig. 5 ist dargestellt, daß die strömungsaustrittsseitigen Schichten zusätzlich mit sich in Durchströmrichtung erweiternden Radialkanälen 8 ausgestattet werden können.

In den rohrförmigen Körper können an jeder beliebigen Stelle, d.h. sowohl in den porösen Bereichen 1, 4 und 6 als auch in den unporösen Bereichen 5, 7, radiale und/oder axialparallele Armierungen, z.B. Armierungseisen, eingebettet werden.

Als starres Material zum Aufbau der gesamten Vorrichtung eignen sich Ein- oder Mehrkornbetone, Metalle, Asphaltgemische, Kunststoffe, Kunstharze od.dgl., wobei die verschiedenen porösen und unporösen Bereiche und Schichten aus entsprechenden Beton-, Asphalt- bzw. Kunststoff- oder Kunstharzsorten unterschiedlicher Porosität gewählt werden. Aus Fertigungsgründen ist es besonders zweckmäßig, die gesamte Vorrichtung einheitlich aus Beton oder einheitlich aus Kunststoff zu fertigen. Speziell die Ausführungsformen der Fig. 4 bis 7 können durch Verfüllen entsprechend gestalteter Radialöffnungen 9 eines rohrförmigen Basiselementes aus starrem, unporösem Material gefertigt werden.

Die Anwendungen der dargestellten Vorrichtungen sind mannigfaltig. Abgesehen von den genannten Anwendungsgebieten als Be- und Entwässerungsrohre, Be- und Entgasungs- oder Entlüftungsrohre für Erdreich, Filterbette usw. ist auch die Verwendung als entwässerndes Kanalrohr, Brunnenschacht, Tunnelröhre od.dgl. möglich. Die Vorrichtung kann beliebigen Querschnitt, z.B. rund, oval oder eckig, beliebigen Durchmesser, beliebige Axiallänge und Wandstärke haben; insbesondere ist auch ein gekrümmter oder unregelmäßiger Axialverlauf möglich. Auch kann die Vorrichtung aus einzelnen Radial- und/oder Axialsegmenten zusammengesetzt sein; die entsprechenden Teilungslinien (nicht gezeigt) können dabei beliebig über die Rohrwandung verlaufen.

## Patentansprüche

1. Vorrichtung zur Zu- oder Abfuhr von Fluiden in bzw. aus Erdreich, Filterbetten od.dgl., mit einem rohrförmigen Körper, dessen Wandung poröse Durchströmbereiche (1, 4, 6) für radiale Durchströmung aufweist, dadurch gekennzeichnet, daß der Körper aus starrem Material lokal unterschiedlicher Porosität gefertigt ist, wobei jeder Durchströmbereich (1, 4, 6) in radialer Richtung einen an sich bekannten zwei- oder mehrschichtigen Aufbau hat, bei welchem der freie Durchströmquerschnitt pro Flächeneinheit in Durchströmrichtung von Schicht (2) zu Schicht (3) zunimmt.

2. Vorrichtung nach Anspruch 1, dadurch gekennzeichnet, daß der Außenumfang jedes lokal begrenzten Durchströmbereiches (4, 6) sich in Durchströmrichtung zumindest abschnittsweise verengt.

3. Vorrichtung nach Anspruch 1 oder 2, dadurch gekennzeichnet, daß die Durchströmbereiche (6) durch Verfüllen von Radialöffnungen (9) des rohrförmigen Körpers mit porösem Material gebildet sind.

4. Vorrichtung nach einem der Ansprüche 1 bis 3, insbesondere zur horizontalen oder geneigten Verlegung und zur Abfuhr von Flüssigkeiten, dadurch gekennzeichnet, daß die Durchströmbereiche (4, 6) in der oberen Hälfte des rohrförmigen Körpers angeordnet sind.

5. Vorrichtung nach Anspruch 1, dadurch gekennzeichnet, daß die gesamte obere Hälfte des rohrförmigen Körpers als ein einziger Durchströmbereich (4) ausgebildet ist.

6. Vorrichtung nach Anspruch 1, dadurch gekennzeichnet, daß die gesamte Wandung (1) des rohrförmigen Körpers als ein einziger Durchströmbereich ausgebildet ist.

7. Vorrichtung nach einem der Ansprüche 1 bis 6, dadurch gekennzeichnet, daß jeder Durchströmbereich (1, 4, 6) eine feinporige strömungseintrittsseitige Schicht (2) mit einer radialen Dicke von 1-10% und eine grobporige strömungsaustrittsseitige Schicht (3) mit einer radialen Dicke von 99-90% der Gesamtdicke der Rohrwandung aufweist.

8. Vorrichtung nach einem der Ansprüche 1 bis 7, dadurch gekennzeichnet, daß die strömungsaustrittsseitigen Schichten (3) der Durchströmbereiche (1, 4, 6) in an sich bekannter Weise zusätzlich mit Radialkanälen (8) versehen sind, die sich vorzugsweise in Durchströmrichtung erweitern.

9. Vorrichtung nach einem der Ansprüche 1 bis 8, dadurch gekennzeichnet, daß in den rohrförmigen Körper radiale und/oder axialparallele Armierungen eingebettet sind.

10. Vorrichtung nach einem der Ansprüche 1 bis 9, dadurch gekennzeichnet, daß sie aus Beton-, Kunststoff- oder Kunstharzsorten unterschiedlicher Porosität gefertigt ist.

11. Vorrichtung nach einem der Ansprüche 1 bis 10, dadurch gekennzeichnet, daß sie aus einzelnen Radial- und/oder Axialsegmenten zusammengesetzt ist.

## Claims

1. A device for the supply and removal of fluids to and from the soil, filter beds or the like, with a tubular body, the wall of which comprises porous flow-through regions (1, 4, 6) for a radial flow-through, characterised in that the body is made of a rigid material of locally differing porosities, each flow-through region (1, 4, 6) having a per-se known two- or multy-layered structure in radial direction in which the free flow-through cross-section increases per area unit, in flow direction, from layer (2) to layer (3).

2. A device according to claim 1, characterised in that the outer circumference of each locally delimited flow-throuch region (4, 6) at least in portions thereof narrows in flow direction.

3. A device according to claim 1 or 2, characterised in that the flow-through regions (6) are formed by filling radial openings (9) of the tubular body with porous material.

4. A device according to any one of claims 1 to 3, in particular for the horizontal or inclined laying thereof and for the removal of liquids, characterised in that the flow-through regions (4, 6) are arranged in the upper half of the tubular body.

5. A device according to claim 1, characterised in that the entire upper half of the tubular body is formed as a single flow-through region (4).

6. A device according to claim 1, characterised in that the entire wall (1) of the tubular body is formed as a single flow-through region.

7. A device according to any one of claims 1 to 6, characterised in that each flow-through region (1, 4, 6) comprises a fineporous flow-entry side layer (2) having a radial thickness of 1-10% and a macroporous flow-exit-side layer (3) having a radial thickness of 99-90% of the entire thickness of the tube wall.

8. A device according to any one of claims 1 to 7, characterised in that the flow-exit-side layers (3) of the flow-through regions (1, 4, 6) are additionally provided with radial channels (8) in a manner known per se, which radial channels preferably widen in flow direction.

9. A device according to any one of claims 1 to 8, characterised in that radial and/or axially parallel reinforcements are embedded in the tubular body.

10. A device according to any one of claims 1 to 9, characterised in that is is made of types of concrete, plastics or synthetic resins of varying porosities.

11. A device according to any one of claims 1 to 10, characterised in that it is assembled of individual radial and/or axial segments.

## Revendications

1. Dispositif pour l'alimentation et l'évacuation de fluides dans respectivement depuis de la terre, de lits filtrants etc., qui est constitué d'un corps tubulaire la paroi duquel comprend des zones de passage poreuses (1, 4, 6) pour le passage radial, caractérisé en ce que le corps est fait d'une matière rigide ayant des porosités qui varient localement, cependant que chacune des zones de passage (1, 4, 6), dans le sens radial, possède une structure en deux ou plusieures couches en soi connue, dans laquelle la section transversale de passage libre augmente d'une couche (2) à l'autre (3) par unité de surface en sens de passage.

2. Dispositif selon la revendication 1, caractérisé en ce que la circonférence extérieure de chaque zone de passage (4, 6) localement délimitée se rétrécit en sens de passage, au moins par sections.

3. Dispositif selon la revendication 1 ou 2, caractérisé en ce que les zones de passage (6) sont constituées par remplissage d'orifices radiaux (9) du corps tubulaire avec de la matière poreuse.

4. Dispositif selon l'une des revendications 1 à 3, en particulier pour la pose horizontale ou inclinée ainsi que l'évacuation de liquides, caractérisé en ce que les zones de passage (4, 6) sont prévues dans la moitié supérieure du corps tubulaire.

5. Dispositif selon la revendication 1, caractérisé en ce que toute la moitié supérieure du corps tubulaire est constituée par une seule zone de passage (4).

6. Dispositif selon la revendication 1, caractérisé en ce que toute la paroi (1) du corps tubulaire est constituée par une seule zone de passage.

7. Dispositif selon l'une des revendications 1 à 6, caractérisés en ce que chaque zone de passage (1, 4, 6) comprend, du côté d'admission du courant, une couche (2) aux micropores ayant une épaisseur radiale de 1 à 10% et, du côté de sortie du courant, une couche (3) aux macropores ayant une épaisseur radiale de 99 à 90%, de l'épaisseur totale de la paroi de tube.

8. Dispositif selon l'une des revendications 1 à 7, caractérisés en ce que les couches (3) des zones de passage (1, 4, 6) du côté de sortie du courant, d'une manière en soi connue, sont pourvues en plus de canaux radiaux (8) qui, de préference, agrandissent en sens de passage.

9. Dispositif selon l'une des revendications 1 à 8, caractérisés en ce que des armatures radiales et/ou axialement parallèles sont encastrées dans le corps tubulaire.

10. Dispositif selon l'une des revendications 1 à 9, caractérisés en ce qu'il est formé de sortes de béton, de matière synthétique ou de résine synthétique ayant des porosités différentes.

11. Dispositif selon l'une des revendications 1 à 10, caractérisés en ce qu'il est composé de segments radiaux et/ou axiaux individuels.
